# EUROPEAN PATENT APPLICATION

(11) **EP 4 494 717 A1**
(43) Date of publication of application: **22.01.2025**
(21) Application number: 24186751.4
(22) Date of filing: 05.07.2024
(51) Int. Cl.: A62C 3/16

(54) **BATTERY MODULE AND ENERGY STORAGE SYSTEM INCLUDING THE SAME**

(30) Priority: 20.07.2023 KR 20230094579
(71) Applicant: Samsung SDI Co., Ltd, Gyeonggi-do 17084 (KR)
(72) Inventor: KIM, Woo Choul, 17084 Yongin-si (KR); HWANG, Tae Sin, 17084 Yongin-si (KR)
(74) Representative: Marks & Clerk LLP

(57) **Abstract**

The present disclosure relates to a battery module and an energy storage system including the same in which a fire extinguishing conduit is positioned to be spaced apart from the center of a vent in a horizontal direction, thereby preventing the conduit from being lost by gas through the vent due to an event. As an example, the present disclosure provides a battery module and an energy storage system, wherein the battery module includes a module case which has an accommodation space therein and in which a plurality of battery cells are accommodated, a module pipe which is positioned above the module case and through which a fire extinguishing agent is movable, and a pipe guide rail which includes an accommodation portion in which the module pipe is accommodated and which is positioned on the module case, wherein each of the plurality of battery cells includes a vent, the vents of the plurality of battery cells are collinearly positioned in a longitudinal direction, and the module pipe and the accommodation portion are positioned to not overlap central areas of the vents in a horizontal direction.

## Description

### BACKGROUND

### 1. Field

An embodiment of the present disclosure relates to a battery module and an energy storage system including the same.

### 2. Description of the Related Art

An energy storage system is a system capable of storing surplus electricity or electricity produced using renewable energy. By using an energy storage system, surplus power is stored during a time in which electricity demand is low, and electricity is supplied during a time in which electricity demand is high, thereby smoothly controlling power supply.

A space or facility in which an energy storage system is installed and operated is typically mandatorily equipped with equipment for suppressing battery fires caused by electric shocks, short circuits, external surges, or the like. A typical fire extinguishing system includes a fire detection sensor, a sprinkler or a fire extinguishing agent sprayer installed around a battery rack or on a ceiling, and the like.

Such a fire extinguishing system uses an indirect spray method of spraying water or a fire extinguishing agent close to a battery or the entire area in which the battery is installed in the event of a battery fire. However, as the energy density of batteries continues to increase, an amount and ejection pressure of flames in vents of battery cells are increasing, which makes it difficult to extinguish or suppress fires with general fire suppression equipment. Therefore, there is a gradually increasing need for a fire extinguishing system that effectively suppresses fires of a plurality of batteries in an energy storage system and is capable of early suppressing high-pressure fires.

The above information disclosed in this Background section is only for enhancement of understanding of the background of the present disclosure and therefore it may contain information that does not constitute prior art.

### SUMMARY

The present disclosure relates to various embodiments of a battery module and an energy storage system including the battery module in which a fire extinguishing conduit is spaced apart from the centers of vents of secondary batteries in a horizontal direction, thereby preventing the conduit from being lost due to gas discharging through the vent in an event.

A battery module and an energy storage system including the same according to an embodiment of the present disclosure includes a module case having an accommodation space accommodating battery cells, a module pipe positioned above the module case and configured to carry a fire extinguishing agent, and a pipe guide rail including an accommodation portion accommodating the module pipe and which is positioned on the module case. Each of the battery cells includes a vent. The vents of the battery cells are collinearly arranged in a longitudinal direction, and the module pipe and the accommodation portion do not overlap central areas of the vents in a horizontal direction.

The module pipe may include a conduit nozzle in an area corresponding to the vent of each of the battery cells.

The conduit nozzle may be a hole passing through the module pipe and may be covered by a cover portion.

The cover portion may include polypropylene or polycarbonate.

The conduit nozzle may be positioned between a line connecting a center of the module pipe and a horizontal center of each of the vents and a line extending downward from the center of the module pipe.

The module pipe may be a cylindrical pipe and may be spaced apart from a horizontal center of each of the vents by approximately 0.5 to approximately 0.7 times a circumference of the module pipe.

A central area of each of the vents may be an area extending approximately 2 mm to approximately 6 mm in opposite directions from a center of the vent.

Through-holes may be at a lower side of the accommodation portion along intervals in a longitudinal direction.

The through-hole may be above a portion corresponding to the vent of each of the battery cells.

A number of fixing portions may be at an upper side of the accommodation portion. The fixing portions may be hooks for fixing the module pipe.

The module pipe may include two plates attached by brazing and the module pipe may have an accommodation space configured to carry the fire extinguishing agent.

The module pipe may have two accommodation spaces extending in the longitudinal direction.

The accommodation space of the module pipe may not overlap a center of each of the vents in the horizontal direction.

A battery module according to another embodiment of the present disclosure includes a body of a module case having an accommodation space and an open upper portion in which a number of battery cells are accommodated, a module pipe positioned above the module case and configured to carry a fire extinguishing agent, and a cover having an accommodation portion in which the module pipe is accommodated and which is coupled to the open upper portion of the body of the module case. Each of the battery cells includes a vent. The vents of the battery cells are collinearly arranged in a longitudinal direction, and the module pipe and the accommodation portion do not overlap central areas of the vents in a horizontal direction.

An energy storage system may include a rack frame in which a number of battery modules identical to the battery module are accommodated, branch pipes configured to connect the module pipes on a rear surface of the rack frame and fixed on the rear surface of the rack frame, and a main pipe configured to connect the branch pipes and transfer the fire extinguishing agent stored in a fire extinguishing agent unit to the branch pipes.

A portion of the pipe guide rail, opposite to the accommodation portion, may be mounted inside the rack frame.

At least some of the above and other features of the invention are set out in the claims.

### BRIEF DESCRIPTION OF DRAWINGS

FIG. 1 is a conceptual diagram illustrating an energy storage system according to an embodiment of the present disclosure.
FIGS. 2A and 2B are a front perspective view and an enlarged rear perspective view, respectively, illustrating a coupling state of a fire extinguishing agent pipe and a battery rack in the energy storage system of FIG. 1.
FIGS. 3A to 3C are a perspective view, an exploded perspective view, and a cross-sectional view, respectively, of a guide rail of the fire extinguishing agent pipe coupled onto a battery module in the energy storage system of FIG. 1.
FIG. 4 is an enlarged view illustrating portion "4" of FIG. 3.
FIG. 5 is an enlarged partial cross-sectional view of an embodiment taken along line "5-5" of FIG. 3A.
FIG. 6 is an enlarged partial cross-sectional view of another embodiment taken along line "5-5" of FIG. 3A.
FIGS. 7A and 7B show experimental results according to an embodiment and a comparative example, respectively, of a module pipe after an event occurs in a battery cell.
FIG. 8 is an enlarged partial cross-sectional view of another embodiment taken along line "5-5" of FIG. 3A.
FIG 9 is a cross-sectional view of another embodiment in which a fire extinguishing agent pipe is installed in a cover of a battery module in the energy storage system of FIG. 1.

### DETAILED DESCRIPTION

Hereinafter, example embodiments of the present disclosure will be described with reference to the accompanying drawings.

The embodiments of the present disclosure are provided to more fully describe the present disclosure to those skilled in the art. The following embodiments may be modified in many different forms, and the scope of the present disclosure is not limited to the following embodiments. Rather, these embodiments are provided so that this disclosure will be thorough and complete, and will fully convey the concept of the present disclosure to those skilled in the art.

Also, the thickness and size of each layer are exaggerated in the drawings for convenience of description and clarity, and like reference numerals in the drawings refer to like elements throughout. As used in this specification, the term "and/or" includes any and all combinations of one or more of the associated listed items. Also, in this specification, it will be understood that when an element A is referred to as being "connected to" an element B, the element A can be directly connected to the element B, or an intervening element C may be present between the elements A and B so that the element A can be indirectly connected to the element B.

Terminologies used herein are for the purpose of describing particular embodiments only and are not intended to be limiting of the present disclosure. As used herein, the singular forms are intended to include the plural forms as well, unless the context clearly indicates otherwise. Further, the terms "comprise and include" and/or "comprising and including" used in this specification should be interpreted as specifying the presence of described shapes, numbers, steps, operations, members, elements, and/or groups thereof and do not exclude the presence or addition of other shapes, numbers, steps, operations, members, elements, and/or groups thereof.

It will be understood that, although the terms "first," "second," etc. may be used herein to describe various members, components, regions, layers, and/or portions, these members, components, regions, layers, and/or portions should not be limited by these terms. These terms are only used to distinguish one member, component, region, layer, or portion from another region, layer, or portion. Thus, a first member, component, region, layer, or portion which will be described below may also refer to a second member, component, region, layer, or portion, without departing from the teaching of the present disclosure.

Spatially relative terms such as "beneath," "below," "lower," "above," "upper," and the like may be used herein for easy understanding of one element or feature and another element(s) or feature(s) as illustrated in the drawings. These spatially relative terms are intended for easy comprehension of the prevent disclosure according to various process states or usage states of the prevent disclosure, and thus, the present disclosure is not limited thereto. For example, when an element or feature in the drawings is turned over, the element and feature described as "beneath" or "below" are changed into "above" or "upper." Thus, the term "below" may encompass the term "above" or "below."

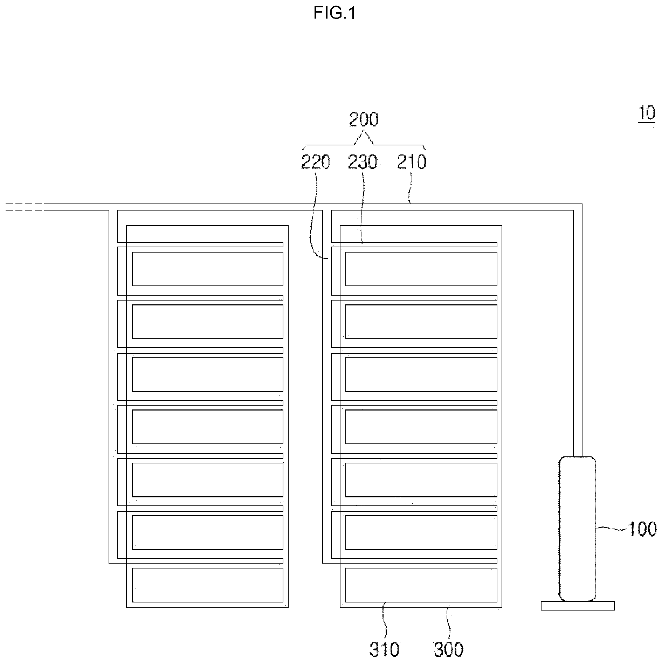

FIG. 1 is a conceptual diagram illustrating an energy storage system according to an embodiment of the present disclosure. Referring to FIG. 1, an energy storage system 10 may include a fire extinguishing agent unit 100 accommodating a fire extinguishing agent, a fire extinguishing agent pipe 200 connected to the fire extinguishing agent unit 100 to supply the fire extinguishing agent, and at least one battery rack 300 connected to the fire extinguishing agent pipe 200.

In one or more embodiments, the fire extinguishing agent unit 100 may include an agent container in which a fire extinguishing agent is accommodated, and in response to the agent container being opened through a separate valve, the fire extinguishing agent may be supplied to the fire extinguishing agent pipe 200. The agent container may be fixed at an installation position as a package type or a wall fixed type. In one or more embodiments, the agent container may be a pressure container for storing a high-pressure fire extinguishing agent. The internal pressure of the agent container may vary according to countries in which the fire extinguishing system (and the respective country's standards) is applied and/or the types of fire extinguishing agents.

In one or more embodiments, the fire extinguishing agent stored in the agent container may include any gas-based fire extinguishing agents, such as trifluoromethane (HFC-23, CHF₃), pentafluoroethane (HFC-125, C₂HF₅), and heptafluoropropane (HFC227ea, CF₃CHFCF₃), or commonly used fire extinguishing agents such as dodecafluoro-2-methylpentane-3-one (CF₃CF₂C(O)CF(CF₃)2) and water. The fire extinguishing agent may be stored in the agent container in a pneumatic or pressurization manner.

The fire extinguishing agent pipe 200 may extend from the fire extinguishing agent unit 100 to a position or positions between battery modules 310 in the battery rack 300. To this end, the fire extinguishing agent pipe 200 may include a main pipe 210 connected to the fire extinguishing agent unit 100, a branch pipe 220 branching off of the main pipe 210, and a plurality of module pipes 230 that extend from the branch pipe 220 to positions between each of the battery modules 310 in the battery rack 300.

One end of the main pipe 210 may be connected to the fire extinguishing agent unit 100, and the main pipe 210 may extend from the fire extinguishing agent unit 100 and pass one side or the vicinity of each of all the battery racks 300 in the energy storage system 10. In response to a valve of the fire extinguishing agent unit 100 being opened, the fire extinguishing agent may be transferred to the vicinity of the battery rack 300 to which the fire extinguishing agent is to be supplied.

The branch pipe 220 may branch off of the main pipe 210 and, in one or more embodiments, may extend in a direction (e.g., downward) in which the battery modules 310 are stacked in the battery rack 300. The branch pipe 220 may provide a path for transferring a fire extinguishing agent, which has moved to the vicinity of the battery rack 300 along the main pipe 210, to the battery modules 310 in the battery rack 300.

In one or more embodiments, each of the module pipes 230 may extend from the branch pipe 220 to a position above one of the battery modules 310. Each of the module pipes 230 may extend to be positioned above vents of battery cells included in the battery module 310. The position of the module pipe 230 will be described in detail below. The module pipe 230 may supply a fire extinguishing agent received from the branch pipe 220 in response to a fire or heat occurring in one or more of the secondary batteries in one or more of the battery modules 310.

The energy storage system 10 may include a plurality of battery racks 300. In addition, each battery rack 300 may include a plurality of battery modules 310. In each battery rack 300, the battery modules 310 may be stacked in row and/or column directions. In addition, the plurality of battery modules 310 included in the battery rack 300 may be connected in series, parallel, or series-parallel to output the desired power.

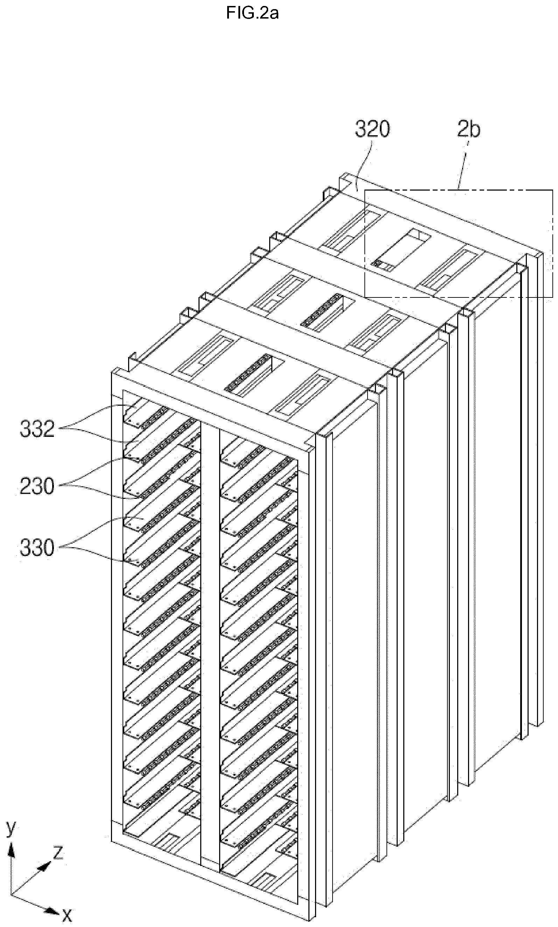

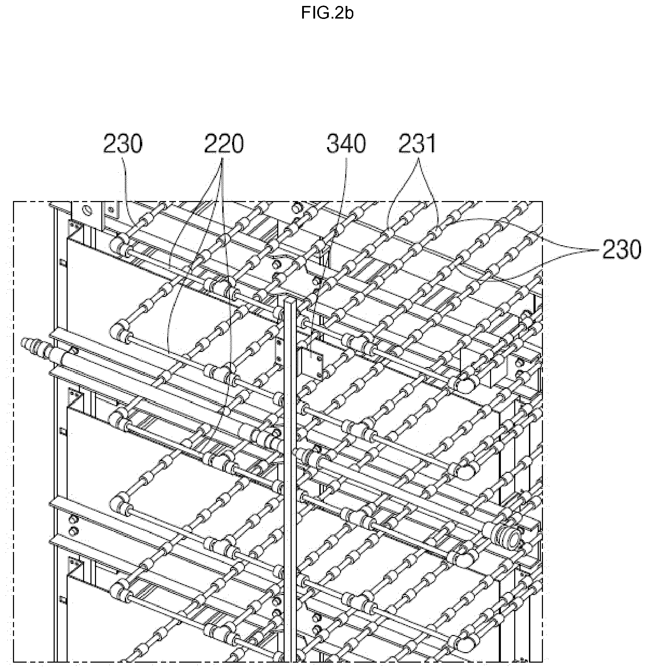

FIG. 2A is a front perspective view illustrating a coupling state of the fire extinguishing agent pipe 200 and the rack frame for a battery in the energy storage system of FIG. 1. FIG. 2B is an enlarged rear perspective view of portion "2b" of FIG. 2A.

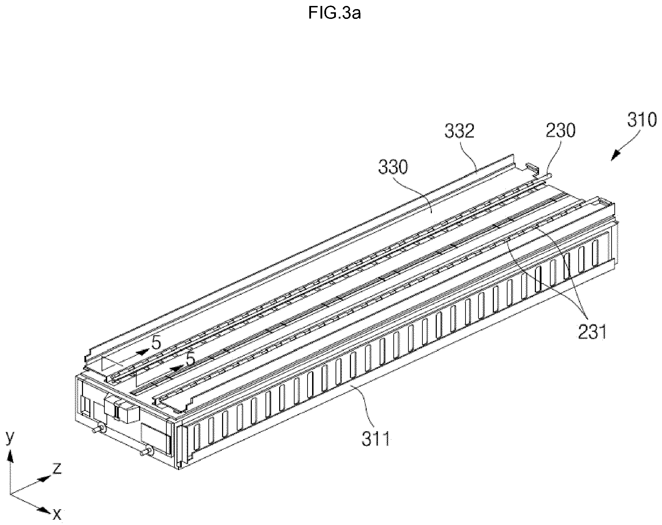

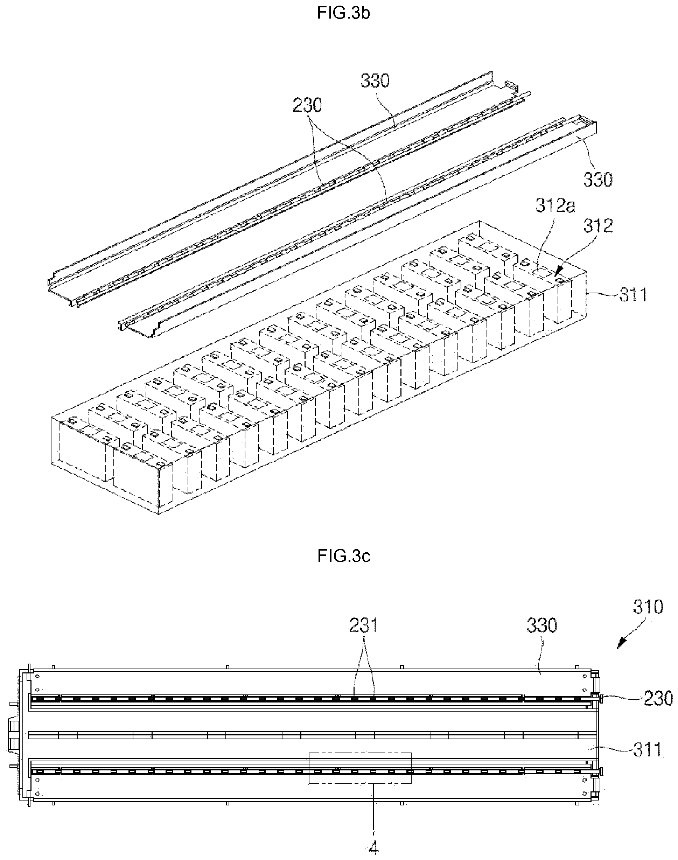

In FIGS. 2A-2B, the module pipe 230 and the branch pipe 220 of the fire extinguishing agent pipe 200 that are mounted in the rack frame 320 for a battery are shown. In addition, FIGS. 3A to 3C are a perspective view, an exploded perspective view, and a cross-sectional view, respectively, of a guide rail of the fire extinguishing agent pipe coupled onto the battery module in the energy storage system of FIG. 1. Hereinafter, the relationship between the fire extinguishing agent pipe 200 and the battery module 310 will be described in more detail with reference to FIGS. 2A and 2B and FIGS. 3A to 3C.

The battery rack 300 may include a rack frame 320, and the plurality of battery modules 310 may be accommodated in the rack frame 320 and electrically connected to each other. In the battery rack 300, the plurality of battery modules 310 may be stacked in a vertical direction (y-axis direction) with each of two columns spaced apart in a horizontal direction (x-axis direction). Although the battery rack 300 is shown as having two rows of the battery modules 310 in the horizontal direction (x-axis direction) in the rack frame 320, in one or more embodiments the battery modules 310 may be stacked in the vertical direction (y-axis direction) in a single row, and the present disclosure is not limited thereto.

The battery modules 310 may be slidably coupled into the rack frame 320 in a longitudinal direction (z-axis direction) of the battery module 310.

The battery module 310 may include a module case 311 and a plurality of battery cells 312.

In one or more embodiments, the module case 311 may have an accommodation space therein, and a plurality of battery cells 312 may be accommodated in the accommodation space. In one or more embodiments, the module case 311 may include a tray having an open upper portion and a cover that seals the upper portion of the tray.

In one or more embodiments, the battery cells 312 may be arranged in two rows (as shown in FIG. 3C), or in any other suitable configuration. In addition, the battery cells 312 may be electrically connected to each other and may also be connected in various connection manners such as in series, in parallel, and/or in series-parallel. An upper portion of each battery cell 312 may include a positive terminal, a negative terminal, and a vent 312a. In one or more embodiments, the vent 312a may be located approximately at a central portion of an upper surface of the battery cell 312. In addition, the vents 312a of the plurality of battery cells 312 may be collinearly arranged in the longitudinal direction (z-axis direction) (i.e., the vents 312a may be arranged in one or more lines in the z-axis direction).

The module case 311 may further include a plurality of discharge holes in areas corresponding to the vents 312a of the battery cells 312. Each of the discharge holes may be configured to be a discharge path for gas discharged through one of the vents 312a of one of the battery cells 312 and may be a path for supplying a fire extinguishing agent discharged through the fire extinguishing agent pipe 200.

A plurality of pipe guide rails 330 on which the module pipes 230 are mounted may be coupled in the rack frame 320. The pipe guide rails 330 and the battery modules 310 may be accommodated in the rack frame 320 and may be alternately stacked in the vertical direction (y-axis direction). The pipe guide rails 330 may be spaced a certain distance apart (e.g., by a gap) from an upper portion of the battery module 310.

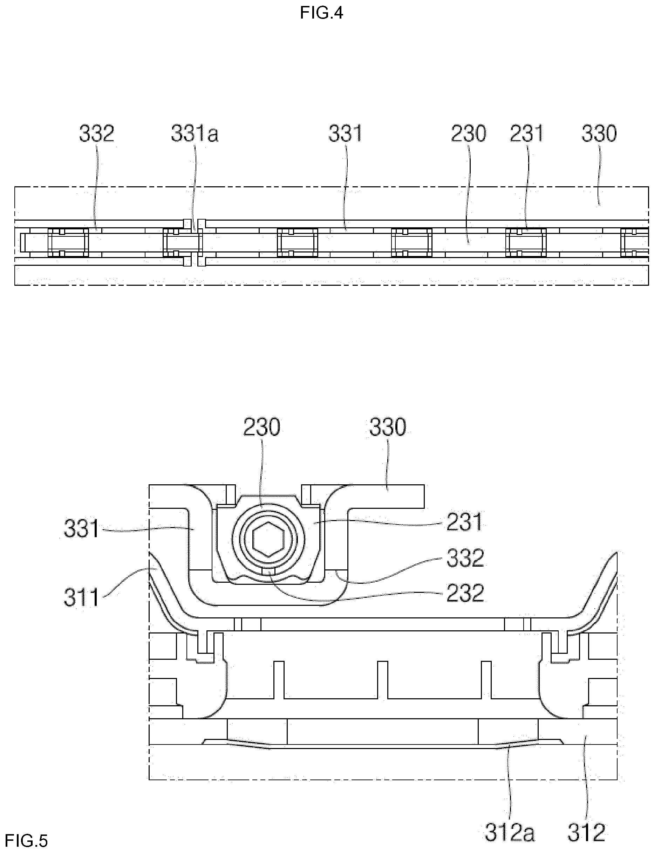

Each of the pipe guide rails 330 may have a flat plate shape, a coupling portion 332 coupled to the rack frame 320 at one side thereof, and an accommodation portion 331 (as shown in FIG. 4) in which the module pipe 230 is accommodated may be provided at the other side opposite to the one side. The coupling portion 332 and the accommodation portion 331 of the pipe guide rail 330 may extend in the longitudinal direction (z-axis direction) of the battery module 310. A cross sectional shape of the accommodation portion 331 may correspond to (e.g., match or substantially match) an outer shape of the module pipe 230. The accommodation portion 331 may have an approximately U-shaped cross section, and an outer side of the module pipe 230 may be in contact with (e.g., in direct contact with) an inner side of the accommodation portion 331.

The module pipe 230 may be slidably coupled to the accommodation portion 331 of the pipe guide rail 330 in the longitudinal direction (z-axis direction). The module pipe 230 may be in the form of a pipe. FIG. 4 is an enlarged view of portion "4" of FIG. 3C. As shown in FIG. 4, a fixing portion 331a for fixing the module pipe 230 may be provided at an upper side of the accommodation portion 331 of the pipe guide rail 330. In one or more embodiments, the fixing portion 331a may be a hook configured to prevent the module pipe 230 accommodated in the accommodation portion 331 from inadvertently falling out of the accommodation portion 331. The fixing portion 331a may extend in the horizontal direction (x-axis direction) along the upper side of the accommodation portion 331. A plurality of fixing portions 331a may be provided in the accommodation portion 331 and spaced apart from each other in the horizontal (x-axis) direction.

A plurality of module pipes 230 may be connected through the branch pipes 220 on a rear surface of the rack frame 320. In one or more embodiments, the branch pipes 220 may connect the plurality of module pipes 230 in the same row. The branch pipe 220 may be fixed by a branch pipe fixing portion 340 on the rear surface of the rack frame 320. In one or more embodiments, the branch pipe fixing portion 340 may be a bracket, but the present disclosure is not limited thereto.

Through-holes may be located at a lower side of the accommodation portion 331 at certain intervals in the longitudinal direction (z-axis direction). The through-holes may be positioned above the vent 312a of each battery cell 312 in the battery module 310. FIG. 5 is a cross-sectional view taken along line "5-5" of FIG. 3A.

The module pipe 230 may include a plurality of conduit nozzles 232 at a lower side of the module pipe 230. The conduit nozzle 232 may be positioned or oriented in a direction approximately perpendicular to an outer surface of the vent 312a. In one or more embodiments, the conduit nozzle 232 may be a hole passing through the module pipe 230. The conduit nozzles 232 may be located at positions corresponding to the vent 312a of each of the plurality of battery cells 312. An area in which the conduit nozzle 232 is located in the module pipe 230 may be covered by a cover portion 231. Because the conduit nozzle 232 of the module pipe 230 is not normally exposed to the outside, a fire extinguishing agent inside the module pipe 230 may positioned only inside a conduit.

However, when an event occurs in a specific battery cell 312 and gas is ejected through the vent 312a, the cover portion 231 covering the conduit nozzle 232 above the vent 312a may be melted, and thus the fire extinguishing agent may be sprayed onto the battery cell 312, in which the event occurred, through the conduit nozzle 232. In one or more embodiments, the gas discharged through the vent 312a may melt the cover portion 231 outside of the conduit nozzle 232 through the discharge hole of the module case 311 and the corresponding through-hole of the accommodation portion 331. In one or more embodiments, a lower surface of the accommodation portion 331 may be spaced apart from an upper side of the module case 311 of the battery module 310 by a distance in a range from about (approximately) 4 mm to about (approximately) 6 mm.

In one or more embodiments, the cover portion 231 may be made of a thermoplastic resin such as polypropylene (PP) with a melting point of approximately 160 °C and polycarbonate (PC) with a melting point of approximately 230 °C. Although it has been described that the cover portion 231 is configured to be melted by the heat of discharge gas, in one or more embodiments the cover portion 231 may be ruptured or fractured into various forms by the heat of the discharge gas, thereby exposing the conduit nozzle 232 of the module pipe 230. In one or more embodiments, a temperature of the gas and heat discharged through the vent 312a may be in a range of about (approximately) 800 °C to about (approximately) 1,200 °C, and the cover portion 231 may be configured to be melted at a temperature of about (approximately) 200 °C.

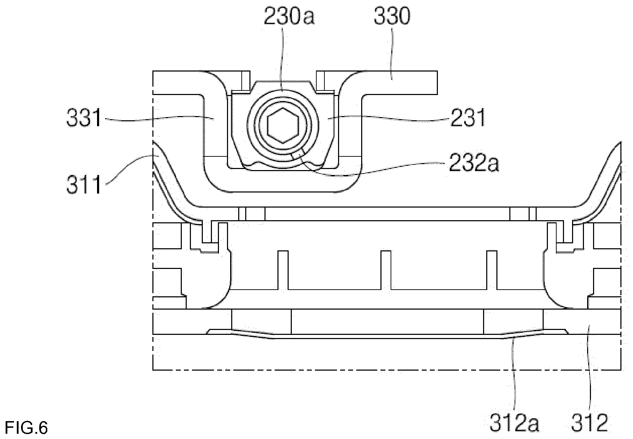

In one or more embodiments, as shown in FIG. 6, each of the conduit nozzles 232a may face the center of the vent 312a of one of the battery cells 312. The conduit nozzle 232a may be positioned adjacent to the vent 312a in a lower area of the module pipe 230a. In one or more embodiments, the conduit nozzle 232a may be positioned between a line connecting the center of the module pipe 230a and the center of the vent 312a and a line extending downward from the center of the module pipe 230a. In an embodiment in which the conduit nozzle 232a is oriented to face the center of the vent 312a, it may be easier to spray the fire extinguishing agent into the vent 312a.

In one or more embodiments, the module pipe 230 and the accommodation portion 331 of the rack frame 320 may be spaced apart from the center of the vent 312a in the horizontal direction (x-axis direction). In one or more embodiments, the module pipe 230 and the accommodation portion 331 of the rack frame 320 may be configured not to overlap central areas of the vents 312a of the plurality of battery cells 312 in a plane view (i.e., a top-down view). The central area of the vent 312a may be an area extending from approximately 2 mm to approximately 6 mm to each of both sides from the center of the vent 312a of each of the plurality of battery cells 312. In the central area of the vent 312a, in response to an event occurring in the battery cell 312, the module pipe 230 may be melted due to high-temperature and/or high-pressure gas, resulting in fires and the loss of the module pipe 230. However, in one or more embodiments, because the module pipe 230 and the accommodation portion 331 of the rack frame 320 are configured not to overlap the central area of the vent 312a in the horizontal direction (x-axis direction), only the cover portion 231 may be melted due to high-temperature and/or high-pressure gas discharged through the vent 312a, and the module pipe 230 may be prevented from being melted and lost.

In one or more embodiments, the center of the module pipe 230 may be spaced apart from the center of the vent 312a in the horizontal direction (x-axis direction) by approximately 0.5 to approximately 0.7 times a circumference of the module pipe 230. In one or more embodiments in which the total circumference of the module pipe 230 is approximately 26 mm and the width of the vent 312a in the horizontal direction (x-axis direction) is approximately 34 mm, the center of the module pipe 230 may be spaced apart from the center of the vent 312a by a distance in a range from approximately 13 mm to approximately 18.2 mm to prevent the loss of the module pipe 230 and to facilitate the melting of the cover portion 231 such that the fire extinguishing agent may be sprayed through the conduit nozzle 232.

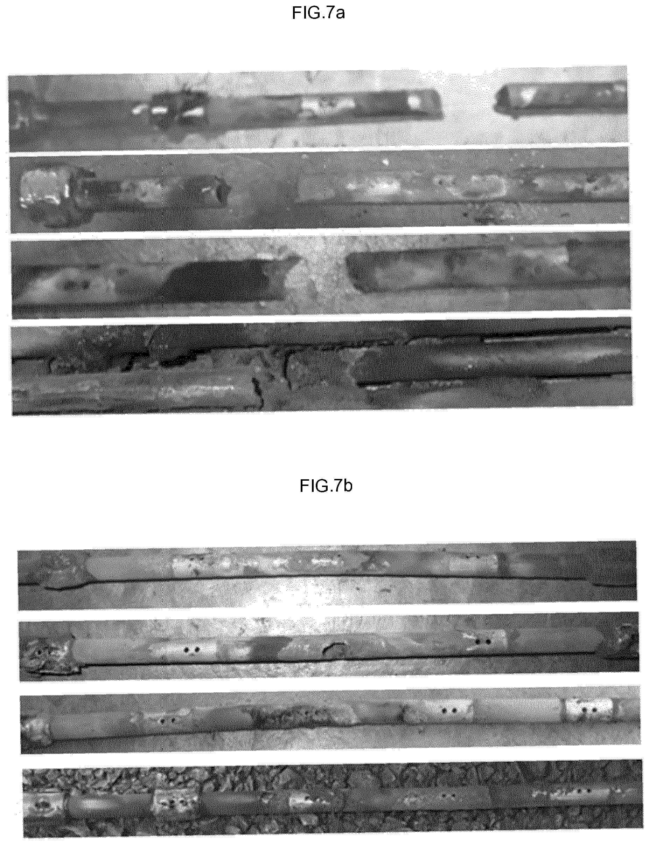

FIGS. 7A and 7B shows images of the module pipe 230 in situations of an example and a comparative example after a loss state of the module pipe 230 is experimented after an event occurs in the battery cell 312.

FIG. 7A shows images, after an event occurs, of the module pipe 230 according to one embodiment in which the center of the module pipe 230 is spaced approximately 13 mm apart from the center of the vent 312a, the total circumference of the module pipe 230 is approximately 26 mm, and the width of the vent 312a in the horizontal direction (x-axis direction) is approximately 34 mm.

FIG. 7B shows images, after an event occurs, of the module pipe 230 according to a comparative example in which the center of the module pipe 230 is positioned above the central area of the vent 312a. Accordingly, when the module pipe 230 is lost, a fire extinguishing agent should be supplied through the vent 312a of the battery cell 312 in which an event occurs, but due to the fire extinguishing agent being ejected to an area other than the vent 312a, it is difficult to suppress fires of the battery cell 312 in which the event occurs.

As shown in results of the experiments shown in FIGS. 7A and 7B, in the case of the comparative example (FIG. 7B) it can be seen that the module pipe 230 was melted and lost due to high-temperature or high-pressure gas discharged through the vent 312a. On the other hand, in the embodiment depicted in FIG. 7A, it can be seen that, in the module pipe 230, areas other than the conduit nozzle 232 may be prevented from melting.

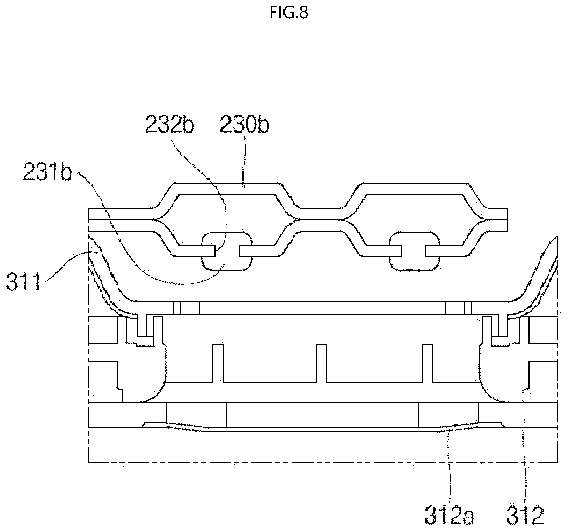

As shown in FIG. 8, a module pipe 230b formed by attaching two plates by brazing may be used as the module pipe 230. In one or more embodiments, the module pipe 230b may have an internal accommodation space in which a fire extinguishing agent may move. In addition, the accommodation space may include two accommodation spaces extending in the longitudinal direction (z-axis direction) of the battery module 310. In addition, the module pipe 230b may be provided such that the accommodation space does not overlap the center of the vent 312a in the horizontal direction (x-axis direction). In one or more embodiments, the module pipe 230b has the accommodation spaces at both sides in a width direction with respect to the center of the vent 312a, and an area coupled through soldering may be positioned at a central portion of the module pipe 230b. The module pipe 230b may include a conduit nozzle 232b at a lower side, and the conduit nozzle 232b may be covered by a cover portion 231b. Two accommodation spaces of the module pipe 230b may provide fire extinguishing agents in response to an event occurring in the battery cell 312, thereby enabling faster fire suppression.

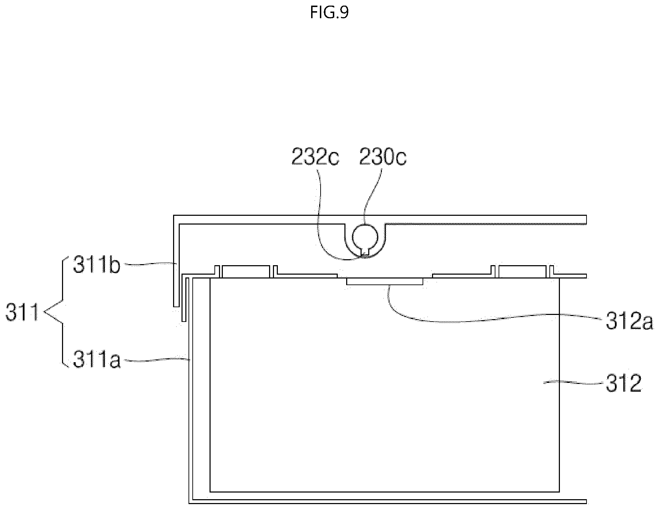

In one or more embodiments, as shown in FIG. 9, the module pipe 230 may be accommodated in a cover 311b of the module case 311 of the battery module 310. In one or more embodiments, the battery cell 312 may be accommodated in the module case 311, and the module case 311 may include a case body 311a having an open upper portion and the cover 311b coupled to the open upper portion of the case body 311a. In addition, the module pipe 230 may be accommodated inside the cover 311b. The cover 311b may include an accommodation portion 331 for accommodating the module pipe 230, and the module pipe 230 may be accommodated in the accommodation portion 331. In an embodiment in which the module pipe 230 is accommodated inside the cover 311b of the module case 311, a separate pipe guide rail 330 may not be provided. The cover 311b may function as the module case 311 and the pipe guide rail 330.

In addition, the accommodation portion 331 provided in the cover 311b may also be configured not to overlap the center of the vent 312a in the horizontal direction (x-axis direction).

In a battery module and an energy storage system including the same according to one embodiment of the present disclosure, a fire extinguishing conduit is spaced apart from the center of a vent in a horizontal direction, thereby preventing the conduit from being lost due to heat from gas venting through the vent due to an event.

The foregoing description describes embodiments of a battery module and an energy storage system including the same according to the present disclosure, and the present disclosure is not limited to the above-described embodiments. The technical scope of the present disclosure also includes a range in which various modifications are possible by anyone with ordinary knowledge in the field to which the present disclosure belongs, without departing from the scope of the present disclosure as claimed in the claims.

## Claims

1. A battery module comprising:
a module case comprising an accommodation space;
a plurality of battery cells accommodated in the accommodation space;
a module pipe positioned above the module case and configured to carry a fire extinguishing agent; and
a pipe guide rail comprising an accommodation portion accommodating the module pipe, the pipe guide rail being on the module case,
wherein the plurality of battery cells comprises a plurality of vents,
wherein the plurality of vents is collinearly arranged in a longitudinal direction, and
wherein the module pipe and the accommodation portion do not overlap central areas of the plurality of vents in a horizontal direction.

2. The battery module of claim 1, wherein the module pipe comprises a plurality of conduit nozzles, each conduit nozzle of the plurality of conduit nozzles being in an area corresponding to a vent of each of the plurality of vents.

3. The battery module of claim 2, further comprising a cover portion and wherein each of the conduit nozzles is a hole passing through the module pipe and is covered by the cover portion.

4. The battery module of claim 3, wherein the cover portion comprises polypropylene or polycarbonate.

5. The battery module of any one of claims 2 to 4, wherein each of the conduit nozzles is between a line connecting a center of the module pipe and a horizontal center of one of the plurality of vents and a line extending downward from the center of the module pipe.

6. The battery module of any preceding claim, wherein the module pipe is a cylindrical pipe spaced apart from a horizontal center of each of the plurality of vents by approximately 0.5 to approximately 0.7 times a circumference of the module pipe.

7. The battery module of any preceding claim, wherein a central area of each vent of the plurality of vents has an area extending approximately 2 mm to approximately 6 mm in opposite directions from a center of each vent.

8. The battery module of any preceding claim, further comprising a plurality of through-holes at a lower side of the accommodation portion along intervals in the longitudinal direction.

9. The battery module of claim 8, wherein each through-hole of the plurality of through-holes is positioned above a portion corresponding to a vent of each of the plurality of vents.

10. The battery module of any preceding claim, further comprising a plurality of fixing portions at an upper side of the accommodation portion, the plurality of fixing portions comprising hooks configured to fix the module pipe.

11. The battery module of any preceding claim, wherein the module pipe comprises two plates brazed together, and wherein the module pipe comprises an accommodation space configured to carry the fire extinguishing agent.

12. The battery module of claim 11, wherein the module pipe comprises two accommodation spaces extending in the longitudinal direction.

13. The battery module of claim 12, wherein each of the two accommodation spaces of the module pipe does not overlap a center of each of the plurality of vents in the horizontal direction.

14. A battery module comprising:
a body of a module case comprising an accommodation space and an open upper portion;
a plurality of battery cells accommodated in the accommodation space;
a module pipe positioned above the module case and configured to carry a fire extinguishing agent; and
a cover comprising an accommodation portion accommodating the module pipe, the cover being coupled to the open upper portion of the body of the module case,
wherein the plurality of battery cells comprises a plurality of vents,
wherein the plurality of vents of the plurality of battery cells is collinearly arranged in a longitudinal direction, and
wherein the module pipe and the accommodation portion do not overlap central areas of the plurality of vents in a horizontal direction.

15. An energy storage device comprising the battery module of any one of claims 1 to 14, optionally further comprising:
a rack frame in which a plurality of battery modules identical to the battery module are accommodated;
branch pipes configured to connect the module pipe of each of the plurality of battery modules on a rear surface of the rack frame and fixed on the rear surface of the rack frame; and
a main pipe configured to connect the branch pipes and transfer the fire extinguishing agent stored in a fire extinguishing agent unit to the branch pipes, and optionally
wherein a portion of the pipe guide rail opposite to the accommodation portion is mounted inside the rack frame.
